# EUROPEAN PATENT APPLICATION

(11) **EP 2 770 343 A1**
(43) Date of publication of application: **27.08.2014**
(21) Application number: 12842393.6
(22) Date of filing: 16.10.2012
(51) Int. Cl.: G01V 1/22, G01V 1/18

(54) **WIRED, WIRELESS AND CABLELESS ALL_IN_ONE DIGITAL SEISMOMETER**

(30) Priority: 17.10.2011 CN 201110313366; 25.10.2011 CN 201110327291; 02.11.2011 CN 201110341047; 20.07.2012 CN 201210252267; 13.09.2012 CN 201210337005; 13.09.2012 CN 201210337037
(71) Applicant: Institute of Geology and Geophysics, Chinese Academy of Sciences, Beijing 100029 (CN); Beijing Geophysics Technology Co., Ltd., Beijing 100029 (CN); Beijing Tongte Technology Co., Ltd., Beijing 100088 (CN); Beijing Tongte Runhua Technology Co., Ltd., Beijing 100083 (CN)
(72) Inventor: GUO, Jian, Beijing 100029 (CN); LIU, Guangding, Beijing 100029 (CN); XU, Jinghua, Beijing 100029 (CN)
(74) Representative: Dilg, Haeusler, Schindelmann Patentanwaltsgesellschaft mbH
(86) International application number: PCT/CN2012/001394
(87) International publication number: WO 2013/056511

(57) **Abstract**

A digital seismic recorder including wired, wireless and cable-less telemetry, which is optimized and combined from three types of instrument: a wired telemetry digital seismic recorder, a wireless telemetry digital seismic recorder and a cable-less digital seismic recorder, is divided into four main parts: a central control operating system (CCOS), a wired telemetering Acquisition Station (AS), a Wireless telemetering Acquisition Station (WAS) and a Cable-less Acquisition Station (CAS). The CCOS is respectively connected to a wired communication Root Unit (RU), a Wireless communication Root Unit (WRU) and a Cable-less Data Unit (CDU), and controls and connects the AS via the RU, controls and connects the WAS via the WRU, and retrieves the data of the CAS via the CDU. The digital seismic recorder including wired, wireless and cable-less telemetry makes the best advantages of wired telemetry, wireless telemetry and cable-less operation, and can be applied to various complex earth surfaces and landforms, providing an optimal solution for seismic exploration and reducing cost of operation.

## Description

### Field of the Invention

This invention relates to a seismic recorder, in particular to a digital seismic recorder including wired, wireless and cable-less telemetry.

### Background of the Invention

A high-precision digital seismic recorder is the geological exploration instrument for recording an artificial seismic signal or a natural seismic signal, thus finding the oil, gas, coal and other mineral resources according to these records of seismic signals; and it also can be used for detecting the internal structure of the earth, predicting engineering and geological disaster, etc. The seismic exploration method is currently the main means of exploring petroleum and natural gas both on land and sea, as well as the key exploration method for other mineral resources; it is widely applied to the research of the inside structure of the earth, engineering exploration and detecting, predicting of geological disasters, etc.

The digital seismic recorder for mineral resources geophysical exploration in accordance with the data transmission can be divided into three classes: including wired telemetry seismic recorder, wireless telemetry seismic recorder, cable-less seismic recorder.

The wired telemetry seismic recorder with the characteristic that commands are sent and the acquired data are transmitted completely through a wired system plays a dominate role in current actual field application, and occupies a high market share in the seismic recorder market all over the world. The 408/428 series of Sercel company, System IV, Scorpion and Aries II system of ION company, Summit system of DMT company in Germany and UniQ system from WesternGeco company in American are the well-know.

The instrument which sends commands and transmits the acquired data though the wireless system is called wireless telemetry seismic recorder, and it is generally used for the special surface condition, also occupies a certain market share. The BOX system of Fairfield company and the Wireless-Seismic system of Wireless Seismic company are wireless telemetry seismic recorders. As the wireless data transmission bandwidth is insufficient to limit the number of channels, this type of instrument is rarely put into practical use.

The cable-less seismic recorder is a special type of seismic recorder with its characteristics are of no acquisition line, no seismic data transmission. Each acquisition station receives and stores collecting data automatically, then retrieves the data from acquisition station using a specialized data retrieving system. some of the instruments send commands such as blasting synchronization to acquisition station through wireless system, but do not receive data, do not monitor working condition of acquisition station. A relatively lighter weight and simply layout is characteristic of this instrument, but because of no real-time data retrieving, so no real-time data quality monitoring, it cannot be generally accepted by the industry. Another disadvantage of this type of instrument is each channel requires a separate power supply, which means a lot of battery management workload. Currently there are GPS timing seismic recorder of CNPC BGP, Ocean Bottom Seismometers and metal mineral exploration cable-less seismic recorder of Institute of Geology and Geophysics Chinese Academy of Sciences, cable-less telemetry seismic recorder of Jilin University College of geoexploration science and technology, FireFly wireless seismic acquisition system of ION company in US, Unite system of Sercel company in France, Geo Ultra cableless land seismic acquisition system of Ascend company in US, GSR system of OYO company in USA, Z system of Fairfield company in USA, SIGMA system of Seismic Source in USA.

As the precision requirement of the oil, gas and mineral exploration is higher and higher, the exploration condition of the surface and the underground geological structure is more and more complex, the exploration area is also growing, and more and more seismic recorder channels are required, any single wired, wireless or cable-less exploration instrument cannot meet the requirements of oil and gas seismic exploration in complex area.

As a lighter weight, simple layout, the wireless telemetry seismic recorder wins the good graces of geophysical exploration experts, but its fatal weakness is that wireless signal transmission may be affected by various obstacles (such as trees, rocks, mountains, buildings, etc.), signal transmission capacity may be decreased greatly, even be interrupted completely.

Geophysicists have tried to improve the ability of data transmission for wired telemetry seismic recorder for the complex terrain y by using the advantages of wireless telemetry instrument.

The wireless telemetry seismic recorder requires no obstacles to block wireless signal transmission between seismic recorder center station and acquisition station, it is very difficult to achieve in the field. Namely, wireless telemetry instrument is widely used in geophysical exploration and other fields, in a wide flat surface condition, wireless telemetry instrument can work very well, but if there are mountains, trees and tall buildings blocking, the transmitter and receiver of wireless telemetry instrument will become to be "invisible", wireless signal will not pass through these obstacles. Then, wireless telemetry instrument will be unable to carry out normal works, however geophysical work often requires to be carried out in the volatility surface area, this is the biggest problem in the development of wireless telemetry instrument.

The captive balloon radio communication has a history of several decades. Two of the biggest challenges which restrict the development of balloon technology are dangerous of hydrogen and no perfect ball materials, along with the successful development of polymer composite materials and a lot of utilization of helium gas, which has brought vitality for the development and application of the captive balloon technology. The rational use of measurement and control technology, optical fiber communication and computer technologies, creates the condition for the gradual improvement of the captive balloon technology. The captive balloon basically is a kind of vehicle which can constitute an air platform loaded variety of devices. The American, Soviet which have a powerful space advantage of the shuttle, satellite, all kinds of aircrafts, still do not give up the research and application of the captive balloon technology, and take the captive balloon as an important supplementary and emergency measures. The service scope of the captive balloon stretches beyond communication area; also it has wide range of uses in military and civilian fields. With the advantage of economy, reliability, flexibility, simplicity, etc., the captive balloon has established its own development position.

The balloon is a lighter than air non-propulsion aircraft, lifts relying on static buoyancy produced by floating gas. The so-called captive balloon means using cable to moor balloon and equipment, hovers over a certain position in the air. The captive balloon differs from free balloon, the latter is not restrained after liftoff, will drift with the wind.

The captive balloon communication system generally comprises captive balloon, captive cable, captive facilities, and payload, monitoring control and logistics equipment.

The captive balloon is filled with hydrogen or helium gas density less than air, provides enough buoyancy according to the work requirement. The shape of the balloon is usually ball, water-drop or airship. Modern captive balloon is usually designed into streamlined airship, with three or four fins, also known as the stabilizer, fins are arranged in "cross", "y" or reverse "y" shape. This streamlined captive balloon with fins can always be against the wind, minimizes wind resistance, and thereby reduces the ground captive load. Currently, some captive balloon has a volume from tens to thousands of cubic meters, several to more than 70 meters in length, the maximum diameter of balloon is not more than 20 meters generally, the captive balloon works in the troposphere, raises the height from hundreds meters to six kilometers.

The captive cable is used to attach the balloon, makes it hover over on a certain position in the air and also has the function of information transmission and power supply and etc..

The captive facility is the center of system operation, control and maintenance. Based on different scales and erection requirements, the captive facility can be divided into fixed and mobile, the mobile is also divided into vehicle and ship.

Payload refers to the equipment used to perform different tasks carried by balloon, which can be a variety of sound, light, electricity, magnetic device. Payload is suspended inside windshield below the balloon. Payload for communication is communication antenna, transceiver and transponder. Monitoring and control equipment are used to monitor and control the meteorological environment, balloon flight attitude and payload work status around the balloon, which comprises a variety of sensors, control components, recording display and automatic management equipment, performs telemetry and remote control through wired and wireless channel.

Logistics support equipment includes electricity, gas supply and repair tools, and must be has means and ability to forecast and communicate inside and outside network. In addition to a fixed manner, support equipment can also be built in a vehicle type completely, in order to improve the system's mobility. The captive balloon system has an advantage of large coverage area, low investment, high efficiency, easy operation and maintenance, strong survival ability and etc.. As a vehicle relying on its own buoyancy support, compared with the aircraft, airships, remotely piloted vehicles, the prominent features of the captive balloon system are which can stay in the air for a long time, which can perform tasks in all-weather, and provide a means of continuous work. The captive balloon also has its weaknesses and limitations, it is limited by bad weather and environmental conditions must have a reliable supply, suitable for fixed or mobile area.

Currently the captive balloon system has not been practical application in the field of geophysics.

In the field of seismic exploration, wireless telemetry instrument was once very popular, such as U.S. OPSEIS's OPSEIS wireless seismic recording system, TELSEIS and BOX wireless telemetry seismograph from the FAIRFIELD Company in the United States, the French company CGG MYRIASEIS's wireless telemetry instrument, Wireless Seismic systems from the Wireless Seismic Company. To solve the wireless signal transmission problem in the undulating surface area, some measures such as using the elevated antenna, antenna mounted at the higher peaks and other measures, but these are only part of the solution; we need to place the antenna to a higher shelf.

### Summary of the Invention

The invention's aims is to overcome the above flaws of existing technology, provides a digital seismic recorder including wired, wireless and cable-less telemetry. So we need to develop a digital seismic recorder including wired, wireless and cable-less telemetry.

To achieve the purpose above, the digital seismic recorder including wired, wireless and cable-less telemetry of the invention is optimized to combine wired telemetry seismic recorder, wireless telemetry seismic recorder, and cable-less digital seismic recorder to constitutes a new digital seismic recorder system, which comprises four parts: CCOS (Central Control Operation System) usually mounted on instrument truck, wired telemetry acquisition station AS (Acquisition Station), wireless telemetry acquisition station WAS (Wireless Acquisition Station) and cable-less acquisition station CAS (Cable-less Acquisition Station). The CCOS is connected to wired communication Root Unit (RU), wireless communication Root Unit (WRU) and Cable-less Data Unit (CDU) through the network respectively, and controls and connects to AS through the RU, controls and connect to WAS through WRU, retrieves CAS's data through CDU.

The invention is a novel digital seismic recorder based on wired, wireless and cable-less telemetry, is the optimization and combination of wired telemetry seismic recorder, wireless telemetry seismic recorder, and cable-less digital seismic recorder. It makes full use of the advantages of wired telemetry, wireless telemetry and cable-less, so that the new digital seismic recorder can be used for all kinds of complex surface and terrain, achieves the best optimization of construction scheme and cost economization in seismic exploration.

In aspect of optimization, the CCOS is the control center and the data retrieving center of the whole seismic recorder, performs human-computer interaction, layout control, acquisition synchronizing, data retrieving and quality control. The CCOS, which usually mounted on the instrument truck, is the main control unit of the whole digital seismic recorder, whose hardware mainly comprises computer server, switch, PC, storage device, plotting equipment and software mainly comprises operation system software and control operation software. The CCOS is connected to RU, WRU and CDU through the network respectively, and controls and connects to AS through RU, controls and connect to WAS through WRU, retrieves CAS's data through CDU.

In aspect of optimization, the RU comprises a high-speed switch module (SM), a control module (CM), a power module (PM), and a GPS module The RU is connected to CCOS by a network line, it provides fiber optic cable interfaces for connecting to the field ground equipment based on the requirement of the capacity of the instrument . The high-speed SM performs data switching; The CM performs control to the SM according to the command of the CCOS. The PM provides power support to each module. The GPS module provides position information, also supports the time synchronization.

In aspect of optimization, the WRU comprises a control module (CM), a power module (PM), radio Transmitter, radio Receiver and a GPS module; The WRU is connected to the CCOS by a network line, uses Transmitter to send control command to WAS, uses Receiver to receive the data of WAS, the CM performs control to the Transmitter and the Receiver according to the command of the CCOS; The PM provides power support to each module; The GPS module provides position information, also supports the time synchronization.

In aspect of optimization, the CDU comprises the SM, the CM, the PM, and the Interface. The CDU is connected to the CCOS by a network line, provides interface to retrieve the data of Wireless Acquisition Station, the interface can have a variety of ways, such as Ethernet, USB, Wi-Fi, Bluetooth and so on. The SM is successively connected to the CM and the PM, the SM is connected to the connecting (or concatenation) to Interface, and the SM is also externally connected to the CCOS system.

In aspect of optimization, the AS comprises the CM, the PM, the Sensor and the GPS module. The CM has two dedicated communication interface connected to the previous and next AS respectively, has a dedicated interface connected to the conventional geophone or the Sensor such as MEMS; The CM is respectively connected to the PM (Power Module), the Sensor and the GPS module, the CM is also used to connect to the other AS.

In aspect of optimization, the WAS comprises the CM, the PM, the Sensor, the Wireless Unit (WU) and the GPS module. The WU provides a single channel data receiving and transmission, establishes connection to the CCOS system; the GPS module provides position information, also supports the time synchronization. The CM is respectively connected to the PM, the Sensor, the WU, and the GPS module.

In aspect of optimization, the CAS comprises the CM, the PM, the Sensor, and the GPS module. Compared with the WAS, it just lacks the WU.

In aspect of optimization, the WAS and the CAS can be designed as a whole, designed and installed as the WAS, and when the WU in the WAS can not connect to the CCOS, it will be turned off automatically, and acquire and receive data as the CAS.

In aspect of optimization, GPS time synchronization is unified by the CCOS, then GPS time synchronization is executed on WAS and CAS, while two kinds of synchronization schemes are carried out on the AS: one is GPS time synchronization; the other is the synchronization by IEEE1588 protocol and pre-computed time difference.

By utilizing the technical scheme above, the digital seismic recorder including wired, wireless and cable-less telemetry, optimized and combined from three types of instrument: a wired telemetry digital seismic recorder, a wireless telemetry digital seismic recorder and a cable-less digital seismic recorder, makes the best advantages of wired telemetry, wireless telemetry and cable-less operation, and can be applied to various complex earth surfaces and landforms, providing an optimal solution for seismic exploration and reducing cost of operation. It is widely applied in petroleum, natural gas and coal field exploration and mineral exploration, engineering exploration and monitoring of geological disasters, etc.

The invention aims to overcome the flaws of existing technology, provides a seismic acquisition station which can be applied on various outdoor occasions, significantly improves practicality of the instrument and has a combining function of wireless and cable-less.

To achieve the purpose above, the seismic acquisition station of the invention is a combination of WAS and CAS; has six major components: the CU (Control Unit), the WCU (Wireless Communication Unit), the AU (Acquisition Unit), the SU (Storage Unit), the GPS module and the PU (Power Unit); the CU is a embedded CPU, is the heart of seismic acquisition station, makes the test and control to the WCU, the AU, the SU, the GPS module and the PU, and manage the retrieving data. The WCU, as a wireless transceiver, is connected to the CU, completes data communication between the acquisition station and the central station of seismic instruments , achieves the control and management to acquisition station. The AU comprises the Sensor and A/D conversion chip, is connected to the CU, and completes the retrieving data according to the command of the CU. The SU is a nonvolatile memory, and is connected to the CU. The GPS module is used to achieve time and data synchronization, also provides position information. The PU provides power support for CU, WCU, AU, SU and GPS. When the WCU works normally, acquisition station is set to the WAS mode by CU; when the WCU can not work normally, acquisition station is set to the CAS mode by CU.

It relates to petroleum, natural gas and coal field exploration and mineral exploration, engineering exploration and monitoring of geological disasters, etc., it is a device which can be used to detect artificial seismic or natural seismic signal and convert the signal into digital signal then record, belongs to seismic exploration and seismic detecting fields. Its advantage is that can be used in different field situations, ensure to record the data normally and improve the practicability of the instrument significantly.

In aspect of optimization, when the WCU works normally, acquisition station is set to the WAS mode by CU; when the WCU can not work normally, acquisition station is set to the CAS mode by CU.

In aspect of optimization, when acquisition station is set to the WAS mode, the SU is turned off; when acquisition station is set to the CAS mode, the SU is usually turned off for saving power consumption because the power consumption of non-volatile memory is larger, and is only turned on for accessing data when the data reaches a certain number.

In aspect of optimization, the WCU is connected to CCOS for command control and data transmission.

In aspect of optimization, We take the following measures to decrease energy consumption: WCU is opened in fixed time, to get the next work plan, and determines the opening time of the WCU according to the work plan; this can minimize the opening time of WCU.

In aspect of optimization, to improve the power supply duration, the PU can be external connected to the new type energy, such as the solar cells, fuel cells etc..

In aspect of optimization, takes the following work flow:
(1)Lay out according to the requirement of the observation system design;
(2)The seismic acquisition station communicates with CCOS through wireless, set to the WAS mode if connected, and receives command from the CCOS and completes the work; or set to the CAS mode if disconnected.
(3)After working for n (n is set in advance) hours, communicates with CCOS through wireless again, repeats step two.

By utilizing the technical scheme above, the seismic acquisition station of the invention is a combination of wireless and cable-less, it can be used in different field situations, ensure data record normally and improve the practicability of the instrument significantly.

The invention aims to overcome the flaws above of existing technology, provides a wireless extension device which can improve the adaptation capability of wired telemetry seismic recorder for complex terrain. It can be used for petroleum, natural gas and coal field exploration and mineral exploration, engineering exploration and monitoring of geological disasters, etc., it is a device can be used to detect artificial seismic or natural seismic signal and convert the signal into digital signal and record, belongs to seismic exploration and seismic detecting fields.

To achieve the purpose above, the wireless extensions device of the wired telemetry seismic recorder of the invention comprises two major units:Wireless Router (WR) and WAS; the WR is connected to the PU of the wired telemetry seismic recorder by a special 100 Mbit NL (Network Line), the WR can be connected to several WAS. The strong point of the invention device is the adding of WR and WAS to wired telemetry seismic recorder, its advantage is that the introducing of wireless acquisition stations can improve the wired telemetry seismic recorder's ability to adapt to the complex terrain. In aspect of optimization, the WR comprises the CM, the PM, single channel Transmitter (T), multi-channel receiver (R), and the GPS module. The CM controls single channel transmitter and multi-channel receiver according to the command of the PU, and is connected to the PU of the wired telemetry seismic recorder by a special 100 M bits NL; multi-channel receiver receives the date of the WAS, the single channel transmitter transmits the command from the PU, controls the data acquisition of WAS.

In aspect of optimization, the WR can be connected to any PU of the wired telemetry seismic recorder by a special 100 Mbit NL, implements wireless expansion, improves the wired telemetry seismic recorder's ability to adapt to the complex terrain.

In aspect of optimization, the WU receives the command from Mainframe by the PU and controls the data acquisition of WAS, and transmits data to Mainframe by PU.

In aspect of optimization, the dedicated 100 Mbit NL is custom made, not only has the function of special 100 Mbit NL, meanwhile can supply power for WR. In aspect of optimization, the WAS comprises the CM, the Sensor, the WU and the GPS module; the WU provides data receiving and transmitting by single channel; the GPS module provides position information, sometimes supports the time synchronization. The PM provides power support .

By utilizing the technical scheme above, the wireless extensions device of the wired telemetry seismic recorder of the invention is to add WR and WAS to the wired telemetry seismic recorders, its advantage is that the introducing of wireless acquisition stations can improve the wired telemetry seismic recorder's ability to adapt to the complex terrain.

The invention aims to overcome the flaws above of existing technology, provides a wireless telemetry seismic recorder that utilizes the WR to improve the data communication ability, it can still normally work when there are obstacles that blocked wireless signal transmission between CCOS and AS , it has a strong adaptability for complex terrain. It is applied to petroleum exploration, natural gas exploration, coal field exploration, mineral exploration, geological disaster monitoring, etc, it is a device can be used to detect artificial seismic or natural seismic signal and convert the signal into digital signal and record, belongs to seismic exploration and seismic detecting fields.

To achieve the purpose above, the wireless telemetry seismic recorder of the invention, which utilizes the wireless router to improve the data communication ability, comprises three major units: the CS (Center Station), the WR (Wireless Router) and the AN (Acquisition Node); ; the CS is the heart of the entire seismic instruments, is responsible for controlling the working condition of entire digital seismic recorder. The WR has the function of routers and switches, transmits the commands of CS and the data of AN automatically; the AN can either connect CS by wireless, or by wireless multi-hop manner through WR. The invention device has characteristic of adding WR which has a signal transmission and receiving function to the wireless telemetry seismic recorders, each node can communicate with several acquisition stations directly, improves data communications capability by wireless relay manner.

The seismic recorder of the invention has characteristic of improving data communications capability by wireless relay manner, enhancing the complex terrain adaptability of the wireless telemetry instruments. The advantage is that it can still normally work when there are obstacles which block wireless signal transmission between CS of seismic recorder and AS, and has a strong adaptability for complex terrain.

In aspect of optimization, wireless router relay stations are usually set up in the higher ground areas, and a number of this WR can be set up. The invention, according to the topographic inequality feature in exploration area, sets up wireless router relay station in the higher areas, and a number of this WR can be set up, ensures that the wireless signal can cover all AS, to solve the wireless signal transmission problem in rugged topography.

In aspect of optimization, adds WR which has a signal transmission and receiving function to the wireless telemetry seismic recorder, each WR connect to CS by wireless means, and can communicate with several acquisition stations directly, improves data communications capability by the manner of wireless relay.

In aspect of optimization, the AN and the CS establish communication using the following process: ①the AN seeks for the CS, if found, establishes communication with it, if not, then takes the second step; ②the AN seeks for the WR, if found, establishes communication with it, if not, then takes the first step.

In aspect of optimization, the WR comprises the CM, the PM, multi-channel Transmitter, multi-channel Receiver, and the GPS module; the CM performs control to multi-channel Transmitter and multi-channel Receiver according to the commands of CS, multi-channel Receiver receives the commands of CS and the data of AN, multi-channel Transmitter transmits the commands of CS and the data of AN.

In aspect of optimization, the AN comprises the CM, the Sensor, the WU and the GPS module; the WU receives and transmits the single channel data; the GPS module provides position information, sometimes supports the time synchronization. the CM controls the Sensor, the WU and the GPS module. The PM provides power support .

By utilizing the technical scheme above, the wireless telemetry seismic recorders improving data communications capability in the manner of wireless relay of the invention improves data communications capability in the manner of wireless relay. The advantage is that it can still normally work when there are obstacles that blocked wireless signal transmission between seismic recorder seismic recorder central station and AS, and has a strong adaptability for complex terrain.

The invention aims to overcome the above flaws of existing technology, provides a type of the wireless telemetry seismic recorders system on the captive balloon. More precisely, it is a wireless telemetry seismic digital recorders system whose transmitting and receiving stations on the captive balloon.

To achieve the purpose above, the wireless telemetry seismic recorders system on the captive balloon of the invention comprises three major units: the Central Control & Operation System (CCOS), Transmitter & Receiver on Captive Balloon (TRCB) and Wireless Acquisition Station (WAS); the Captive Balloon connects to the captive facility platform by the captive cable, the captive cable has a copper wire as the power supply line, provides power support for the TRCB on the Captive Balloon; the optical fiber is embedded in cable interspace, as the data communication channel for the CCOS and TRCB on the Captive Balloon.The effective coverage provided by the Captive Balloon for VHF/UHF communication, can be calculated approximately using the formula S (km) =3.57H^{1/2}(m). If being set in a 600 to 6000m working height, the cover radius will be 87 to 277km; cover area will be 2.4 to 240000 square kilometers. The Captive Balloon's communication system can be arranged flexibly, and less invested, technology is relatively simple and easy to repair. As the loss of radio wave propagation in air is smaller than on the ground, to the same scope, one Transmitter on the Captive Balloon is equal to several on the ground. The TRCB on the Captive Balloon sends the commands to WAS, the WAS transmits the acquisition seismic data to the TRCB on the Captive Balloon.

The most important feature of the system is to install the transmitting and receiving stations of ordinary wireless telemetry instrument on the high altitude Captive Balloon, which makes there is no obstacles and "visible" between the Captive Balloon and the WAS, improves the effective coverage of the data communication. That achieves a wireless telemetry technique in complex surface, and makes the wireless telemetry digital seismic recorders realize real-time data acquisition and retrieving in complex surface.

In aspect of optimization, the TRCB on the Captive Balloon comprises the CM, the PM, Transmitter (T), multi-channel Receiver (R) and the GPS module; the CM performs control to Transmitter and Receiver according to the command of the CCOS, Receiver receives the command of the CCOS and the data of WAS, Transmitter sends the command of the CCOS to WAS. The GPS module is used to obtain and provide position data; . The PU module provides power to the load. Herein: the CM is respectively connected to the PM, Transmitter, Receiver and the GPS module.

In aspect of optimization, multi-channel receiver R is the multi-channel receiver of VHF.

In aspect of optimization, the CCOS is arranged on an instrument truck or a captive facility platform, software and hardware is combined, and it controls the entire digital seismic recorder working condition. The CCOS of the wireless telemetry seismic recorder system on the Captive Balloon of the invention is arranged on an instrument truck (or on a captive facility platform, such as vehicle-mounted car platform), and it controls the entire digital seismic recorders working condition.

In aspect of optimization, the hardware of the CCOS comprises computer server, switch, PC, storage device, plotting equipment and the GPS module, and it performs human-computer interaction, layout control, acquisition synchronizing, data retrieve, quality control and the like. The captive facility platform is preferably mounted car platform. The Switch is successively connected to Server the GPS module, the Switch is connected together to Storage, Plotting and PC, the Server is externally connected to the TRCB on the Captive Balloon.

In aspect of optimization, the WAS comprises the CM, the PM, Sensor, the WU and the GPS module; the WU provides single channel data receiving and transmission, and it establishes communication with TRCB on the Captive Balloon; the GPS module provides position information, also supports the time synchronization. The CM takes charge of controlling and managing the whole AS; the WU provides single channel data receiving and transmission, and it establishes communication with the CCOS through TRCB on the Captive Balloon; the Sensor takes charge of the seismic data acquisition. the CM respectively connected to the PM, Sensor, WU and the GPS module.

In aspect of optimization, the shape of Captive Balloon has ball, water-drop and airship.

In aspect of optimization, the Captive Balloon can equip power device to keep the balloon position on the stability.

In aspect of optimization, the captive cable has a copper wire as the power supply line, the optical fiber is embedded in cable interspace as the data communication channel, covered with a bearing fiber and lightning leader metal net, the outermost layer is a seal, resistant, anti-aging effect jacket.

In aspect of optimization, the connected ends of the captive cable are required to install optical rotary connector; upper connector can make the balloon and the captive cable move relatively, do not introduce any torsion into the cable; lower connector is installed on the captive cable capstan center axis, make the cable connected to the capstan do not have torsion as capstan moves. In short, the role of the connector must ensure that each function captive rope line has a low loss, high reliability connection.

In aspect of optimization, the wireless telemetry seismic recorder system on the captive balloon of the invention makes full use of the high altitude Captive Balloon communication technology and VHF multi-channel receiving technology, it makes there is no obstacles and "visible" between the Captive Balloon and the WAS, to improve the effective coverage of the data communication, it achieves a wireless telemetry technique in complex surface, and make the wireless telemeter digital seismic recorder to realize a real-time data acquisition and retrieving in complex surface.

The invention aims to overcome the above flaws of existing technology, provides a wireless repeater station on aircraft device used for wireless telemetry instrument data communication.

To achieve the purpose above, the wireless repeater station for wireless telemetry instrument data communication on aircraft device of the invention uses aircraft to establish the WR in the high altitude, is used for wireless data communication and transmission for the wireless telemetry data acquisition instrument, it makes there is no obstacles and "visible" between the CCOS and the WR, WR and WAS of the instrument, enhances ability of wireless telemetry instrument passes through obstacles. Its advantage is that it can make there is no obstacles and "visible" between the CCOS and the WR, WR and WAS of the instrument, enhance ability of wireless telemetry instrument passes through obstacles.

In aspect of optimization, the WR is suspended below the aircraft, the power supply of the WR is provided by aircraft; the CCOS is arranged on an instrument truck. The aircraft staying in the air needs to consume fuel, so the WR is required to have a lighter weight and small energy consumption, so that the aircraft can stay in the air for a long time easily.

In aspect of optimization, the WR comprises the CM, the PM, multi-channel Transmitter, multi-channel Receiver, and the GPS module; the CM controls multi-channel Transmitter and multi-channel Receiver according to the commands of CS, multi-channel Receiver receives the commands of CS and the data of WAS, multi-channel Transmitter transmits the commands of CCOS and the data of WAS.

In aspect of optimization, the WR uses the following working process
a: the WR is connected to the CCOS.
b: the WR receives the command of the CCOS, transmits to the WAS ;
c: the WAS receives the command and gets the relative data then transmits to the WR ;
d: the WR receives the data, transmits to the CCOS.

In aspect of optimization, the GPS module is used to obtain and provide position data.

In aspect of optimization, the wireless telemetry instrument is the wireless telemetry seismic recorder.

In aspect of optimization, the aircraft carrying the WR includes helicopter, or airship, or fixed-wing aircraft.

In aspect of optimization, When the aircraft is helicopter or airship, uses a hover mode; When the aircraft is fixed-wing aircraft, uses a hover mode within a certain range, makes it "visible" between WR and WAS.

In aspect of optimization, the helicopter is manned or unmanned helicopter, the airship is manned or unmanned airship.

In aspect of optimization, the helicopter can also be the electric unmanned helicopter power supplied by a cable connected to the ground, which can save a lot of power costs. Electric unmanned helicopter can also be equipped with a large-capacity energy storage device, prepares for use as wired power failure, the storage battery at least can be able to support the helicopter to land safely.

By utilizing the technical scheme above, the wireless repeater station for wireless telemetry instrument data communication on aircraft device of the invention has a advantage that it can make there is no obstacles and "visible" between the CCOS and the WR,WR and WAS of the instrument, enhance ability of wireless telemetry instrument passes through obstacles.

### Description of Drawing

Fig.1 shows the functional block diagram of the digital seismic recorder including wired, wireless and cable-less telemetry;
Fig.2 shows the functional block diagram of the CCOS of the digital seismic recorder of the invention;

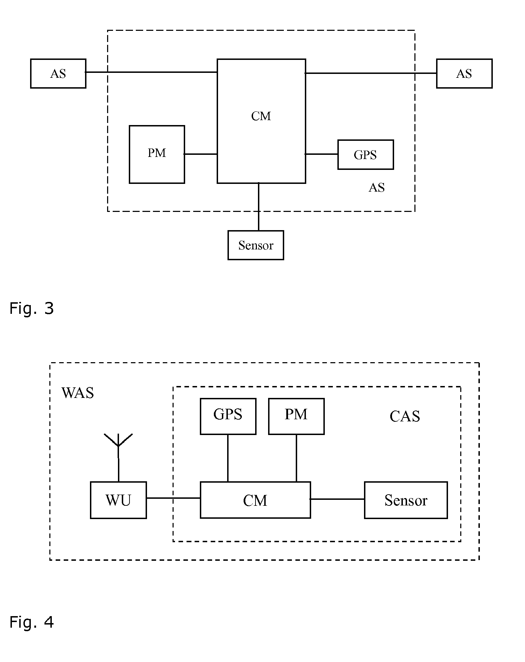

Fig.3 shows the functional block diagram of the AS of the digital seismic recorder of the invention;
Fig.4 shows the functional block diagram of the WAS and the CAS of the digital seismic recorder of the invention;

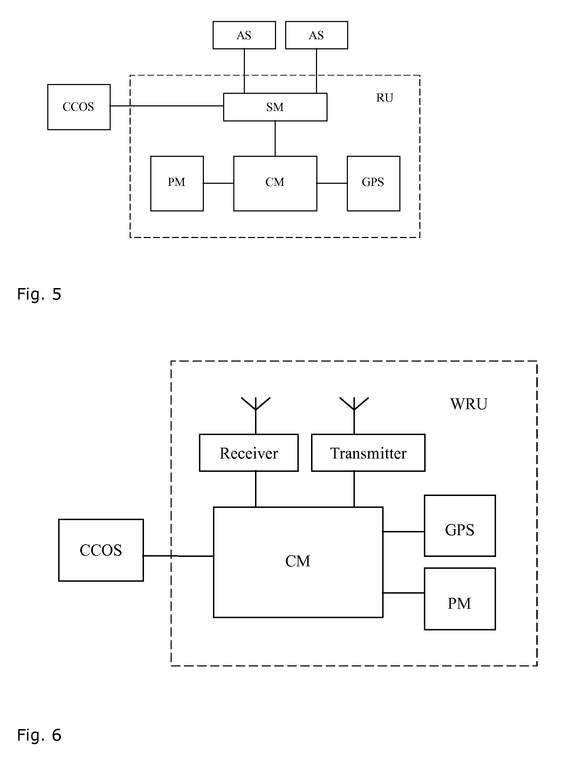

Fig.5 shows the functional block diagram of the RU of the digital seismic recorder of the invention;
Fig.6 shows the functional block diagram of the WRU of the digital seismic recorder of the invention;
Fig.7 shows the functional block diagram of the CDU of the digital seismic recorder of the invention;
Fig.8 shows the functional block diagram of the seismic acquisition station of the invention which has a combination function of wireless and wireless ;
Fig.9 shows the functional block diagram of the wireless extension device of the wired telemetry seismic recorder of the invention;
Fig.10 shows the functional block diagram of the WR of the wireless extension device of the wired telemetry seismic recorder of the invention;
Fig.11 shows the functional block diagram of the WAS of the wireless extension device of the wired telemetry seismic recorder of the invention;
Fig.12 shows the functional block diagram of the wireless telemetry seismic recorder by using wireless repeater meaner to improver data communication ability
Fig.13 shows the functional block diagram of the WR of the wireless telemetry seismic recorder by using wireless repeater meaner to improver data communication ability
Fig.14 shows the functional block diagram of the AN of the wireless telemetry seismic recorder by using wireless repeater meaner to improver data communication ability
Fig.15 shows the Schematic plot of the wireless telemetry seismic recorders system on the captive balloon of the invention;
Fig. 16 shows the functional block diagram of the TRCB on the captive balloon of the seismic recorders system of the invention;
Fig.17 shows the functional block diagram of the CCOS of the seismic recorder of the invention;
Fig.18 shows the functional block diagram of the device of the WR on aircraft used for wireless telemetry instrument data communication of the invention Fig.19 shows the functional block diagram of the WR of the invention

### Detail Description of the Invention

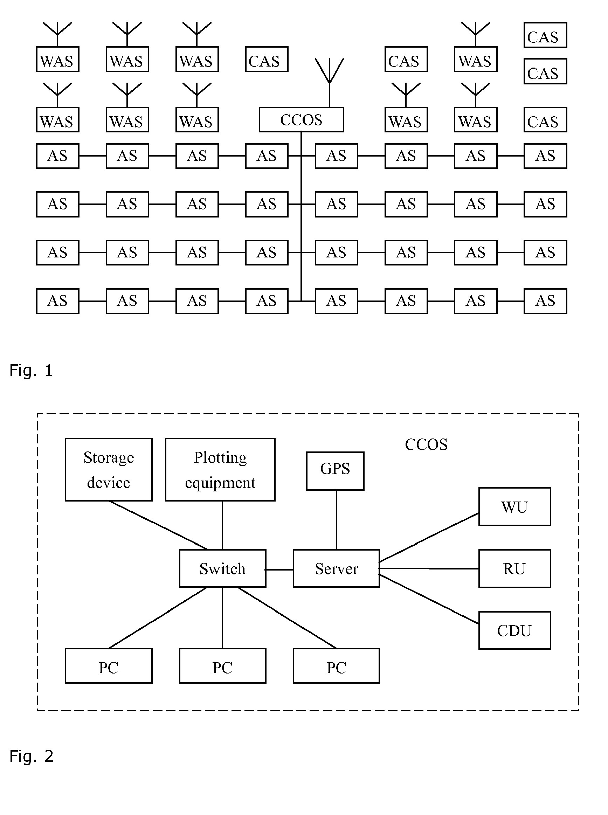

As shown in the figure 1, the digital seismic recorder including wired, wireless and cable-less telemetry of the invention is a new type of digital seismic recorder system, which is optimized to combine wired telemetry seismic recorder, wireless telemetry seismic recorder, and cable-less digital seismic recorder. The greatest characteristic of the system is making full use of the advantages of wired telemetry, wireless telemetry and cable-less, so that the new digital seismic recorder system can be used for all kinds of complex surface and terrain, achieves the best optimization of prospecting scheme and cost of seismic exploration. The system can be divided into four units: Central Control Operation System (CCOS) (usually mounted on an instrument truck), wired telemetry Acquisition Station (AS), Wireless telemetry Acquisition Station (WAS) and Cable-less Acquisition Station (CAS).

The CCOS of the digital seismic recorder system of the invention is the control center and the data retrieving center of the whole seismic recorder, performs human-computer interaction, layout control, acquisition synchronizing, data retrieving and quality control. The CCOS, which usually mounted on the instrument truck, is the main control unit of the whole digital seismic recorder, whose hardware mainly comprises computer server, switch, PC, storage device, plotting equipment and software mainly comprises operation system software and control operation software. The Server can use the Dawn PHPC200 high-performance computers, the standard configuration has five set of PHPC200 computation module, 10 multi-core CPU and 160 GB of memory, 5 pieces of 146 GB SAS hard disk, and can realize 3 + 1 redundant power supply configuration. The Switch chooses 12 interfaces high performance network switches, the PC chooses industrial control computers, using 24 inch LCD screen. The RIAD uses small RAID5 of 10T; tape drives can choose IBM3590 tape drive.

The CCOS of digital seismic recorder of the invention is connected to wired communication Root Unit (RU), wireless communication root Unit (WRU) and Cable-less Data Unit (CDU) through the network respectively, and controls and connects to AS through the wired communication root unit (RU), controls and connect to WAS through wireless communication root unit (WRU), retrieves CAS's data through CDU.

The Acquisition Station (AS) of digital seismic recorder system of the invention comprises the CM, the PM, the Sensor and the GPS module. The CM has two special communication interface connected to the previous and next AS respectively, has a special interface connected to the conventional geophone or the Sensor such as MEMS. One or several AS are connected to the RU, establish a communication channel of wired telemetry.

The WAS of digital seismic recorder system of the invention comprises the CM, the PM, the Sensor, the Wireless Unit (WU) and the GPS module. The WU provides the single channel data receiving and transmission, and establishes the communication with the CCOS; the GPS module provides position information, also supports the time synchronization.

The CAS of seismic recorders system of the invention comprises the CM, the PM, the Sensor, and the GPS module. Compared with the Wireless Acquisition Station, just lacks the WU. For the WAS and the CAS, we can design them as a whole, carries on the design and installation according to the WAS, when the WU can not communication with the CCOS, turns off the WU automatically, Acquisition and receive data as the CAS.

The RU of seismic recorders system of the invention comprises a high-speed Switch Module (SM), a Control Module (CM), a Power Module (PM), and a GPS module. The RU is connected to CCOS by a network line, and provides fiber optic cable interfaces for connecting to the field ground equipment based on the requirement of the capacity of the instrument . The high-speed SM performs data switching; The CM performs control to the SM according to the command of the CCOS. The PM provides power support to each module.

The WRU of seismic recorders system of the invention comprises comprises a control module (CM), a power module (PM), radio Transmitter, radio Receiver and a GPS module; The WRU is connected to the CCOS by a network line, uses Transmitter to send control command to WAS, uses Receiver to receive the data of WAS, the CM performs control to the Transmitter and the Receiver according to the command of the CCOS; The PM provides power support to each module.

The CDU of seismic recorders system of the invention comprises the SM, the CM, the PM, and the data Interface. The CDU is connected to the CCOS by a network line, provides interface to retrieve the data of CAS, the interface can have a variety of ways, such as Ethernet, USB, WiFi, Bluetooth and so on.

The wired, wireless, cable-less three in one digital seismic recorder of the invention has the GPS time synchronization is unified by the CCOS, then GPS time synchronization is executed on WAS and CAS, while two kinds of synchronization schemes are carried out on the AS : one is GPS time synchronization; the other is the synchronization by IEEE1588 protocol and pre-computed time difference.

Because of lighter weight, simple layout, the wireless telemetry seismic recorder wins the good graces of geophysical exploration experts, but its fatal weakness is that wireless signal transmission may be affected by various obstacles (such as trees, rocks, mountains, buildings, etc.), signal transmission capacity may be decreased greatly, even be interrupted completely.

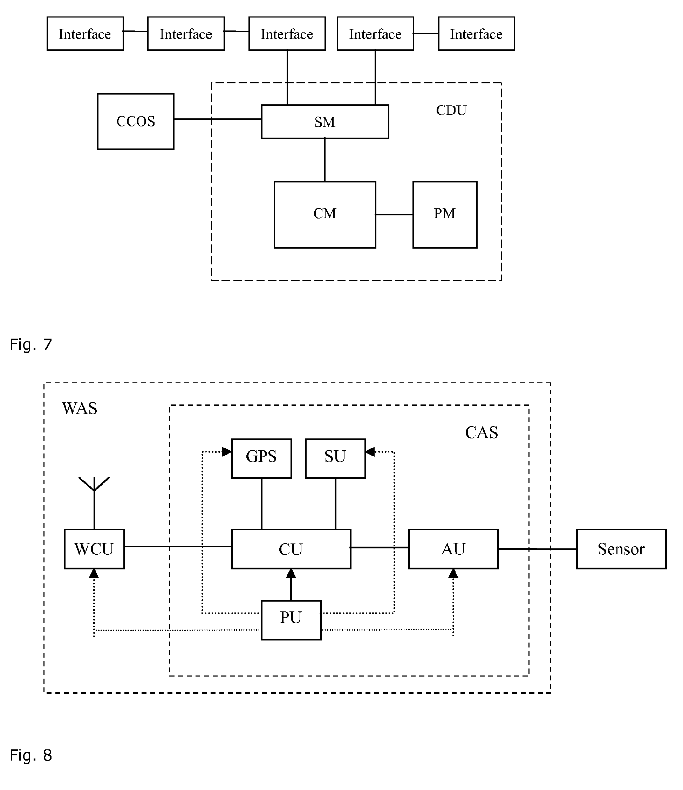

The invention is a kind of seismic acquisition station which has a combination of wireless and cable-less function; As is shown in fig. 8 the system comprises six major components: the CU (Control Unit), the WCU (Wireless Communication Unit), the AU (Acquisition Unit), the SU (Storage Unit), the GPS module and the PU (Power Unit);

The characteristic of this new kind of seismic acquisition station is that the WAS (Wireless Acquisition Station) and the CAS (Cable-less Acquisition Station) are combined together, so it can be used in different field situations, ensure to record the data normally.

The invention of a kind of seismic acquisition station which has a combination of wireless and cable-less function takes the following work flow:
(1)Lay out according to the requirement of the observation system design;
(2)The seismic acquisition station communicates with CCOS through wireless, set to the WAS mode if connected, and receives command from the CCOS and completes the work; or set to the CAS mode if disconnected.
(3)After working for n (n is set in advance) hours, communicates with CCOS through wireless again, repeats step two.

In the invention of a kind of seismic acquisition station which has a combination of wireless and cable-less function, the CU is a embedded CPU, is the heart of seismic acquisition station, does the test and control to the WCU, the AU, the SU, the GPS module and the PU, and manage the retrieving data; The control unit CM can be a OMAP3530 or a OMAPL138, takes charge of controlling and managing the whole acquisition station;

In the invention of a kind of seismic acquisition station which has a combination of wireless and cable-less function, the WCU is a wireless transceiver which is connected to the CU, completes data communication between the acquisition station and the CCOS, and achieves the control and management to acquisition station. When the WCU works normally, acquisition station is set to the WAS mode by CU; when the WCU can not work normally, acquisition station is set to the CAS mode by CU.

In the invention of a kind of seismic acquisition station which has a combination of wireless and cable-less function, the AU comprises sensor and A/D translate chip, and is connected to the control unit CU, complete the data acquisition by the command from the CU.

In the invention of a kind of seismic acquisition station which has a combination of wireless and cable-less function, the stored unit SU is a nonvolatile memory, and is connected to the CU. When the WCU works normally, acquisition station is set to the WAS mode by CU; when the WCU can not work normally, acquisition station is set to the CAS mode by CU. when acquisition station is set to the CAS mode, the SU is usually turned off for saving power consumption because the power consumption of non-volatile memory is larger, and is only turned on for accessing data when the data reaches a certain number.

In the invention of a kind of seismic acquisition station which has a combination of wireless and cable-less function, the Wireless Communication Unit (WCU) is connected to CCOS for command control and data transmission. As the energy consumption of the WCU is larger, We take the following measures to decrease energy consumption: WCU is opened in fixed time, to get the next work plan, and determines the opening time of the WCU according to the work plan; this can minimize the opening time of WCU.

In the invention of a kind of seismic acquisition station which has a combination of wireless and cable-less function, the GPS module is used to achieve time and data synchronization, and also provides position information. The GPS module can be IT03 OEM GPS which is from Fastrax company and has a characteristic of small size(22x23x2.7mm), ultra low power (<95mW @ 2.7V) , high sensitive(-156dBm(tracking)), accurate IPPS time signal output(RMS 20ns) and low cost.

In the invention of a kind of seismic acquisition station which has a combination of wireless and cable-less function, the PU provides power support for CU, WCU, AU, SU and GPS model , the PU can be external connected to the new type energy, such as the solar cells, fuel cells etc.

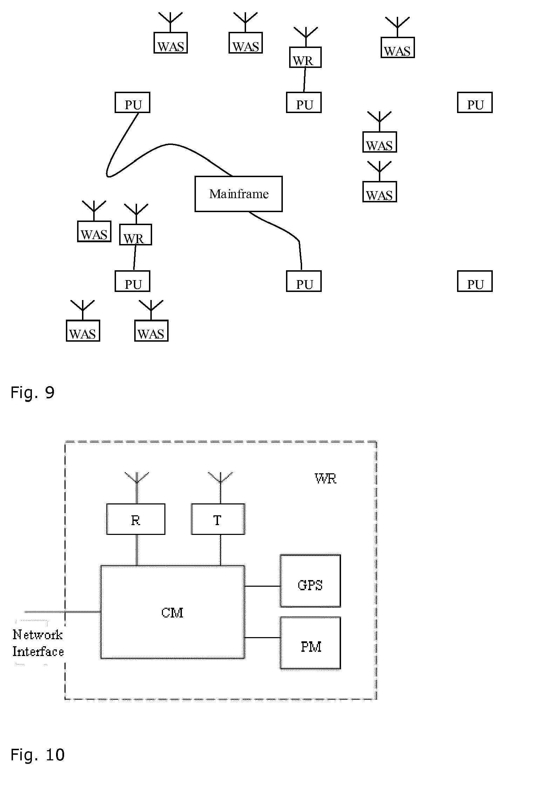

The goodness of the invention device is the adding of WR and WAS to wired telemetry seismic recorder, its advantage is that the introducing of wireless acquisition stations can improve the wired telemetry seismic recorder's ability to adapt to the complex terrain. The wireless extensions device of the wired telemetry seismic recorder of the invention comprises two major units (fig. 9): Wireless Router (WR) and Wireless Acquisition Station (WAS).

This invention is a kind of extend device of cable telemetry seismic recorder, called Wireless Router(WR) which is connected to the PU of the wired telemetry seismic recorder by a special 100 Mbit NL (Network Line), the WR can be connected to several WAS (fig. 9).

In the invention of wireless extensions device of the wired telemetry seismic recorder, the WR (fig. 10) comprises the control module CM, the power module PM, single channel transmitter T, multi-channel receiver R, and the GPS module. The CM controls single channel transmitter and multi-channel teceiver according to the command of the PU, and is connected to the PU of the wired telemetry seismic recorder by a special 100 Msbit NL; multi-channel receiver receives the date of the WAS, the single channel transmitter transmits the command from the PU, controls the data acquisition of WAS.

In the invention of wireless extensions device of the wired telemetry seismic recorder, the WR(fig. 9) can be connected to any PU of the wired telemetry seismic recorder by a special 100 Mbit NL to implement wireless expansion, and improve the wired telemetry seismic recorder's ability to adapt to the complex terrain.

In the invention of wireless extensions device of the wired telemetry seismic recorder, the WU (fig. 9) receives the command from Mainframe by the PU and controls the data acquisition of WAS, and transmits data to Mainframe by PU.

In the invention of wireless extensions device of the wired telemetry seismic recorder, the dedicated 100 Mbit NL is custom made, not only has the function of special 100 Mbit NL, meanwhile can supplie power for WR.

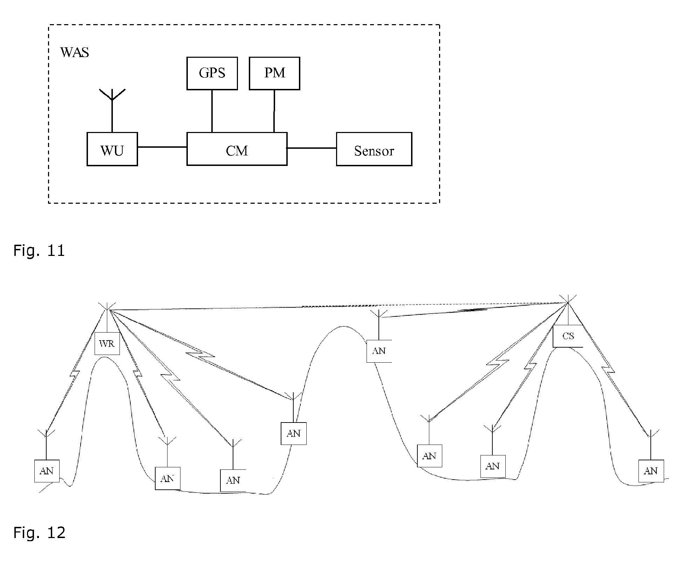

In the invention of wireless extensions device of the wired telemetry seismic recorder, the WAS(fig. 11) comprises the CM, the Sensor, the WU and the GPS module. The WU provides data receiving and transmitting by single channel, the GPS module provides position information, sometimes supports the time synchronization. The PM provides power support.

The invention, according to the topographical relief in exploration area, sets up wireless router relay station in the higher areas, to solve the wireless signal transmission problem in rugged topography.

The invention of the wireless telemetry seismic recorder which utilizes the wireless router to improve the data communication ability comprises three major units (Fig.12): the CS (Center Station), the WR (wireless router) and the AN (Acquisition Node).

Based on the wireless telemetry seismic recorder which utilizes the wireless router to improve the data communication ability, the invention of the wireless telemetry seismic recorder which utilizes the wireless router to improve the data communication ability has a adding of WR (Wireless Router). The WR has the function of routers and switches, every WR can be connected to the CS by wireless, and can communicate with several acquisition nodes directly, improves data communications capability by wireless relay manner.

In the invention of the wireless telemetry seismic recorder which utilizes the WR to improve the data communication ability, the acquisition node AN can be a wireless connection to the CS, and also can be a multi-hop connection through the WR.

In the invention of the wireless telemetry seismic recorder which utilizes the WR to improve the data communication ability, the AN and the CS establish communication using the following process: ①the AN seeks for the CS, if found, establishes communication with it, if not, then takes the step two; ②the AN seeks for the WR, if found, establishes communication with it, if not, then takes the step one.

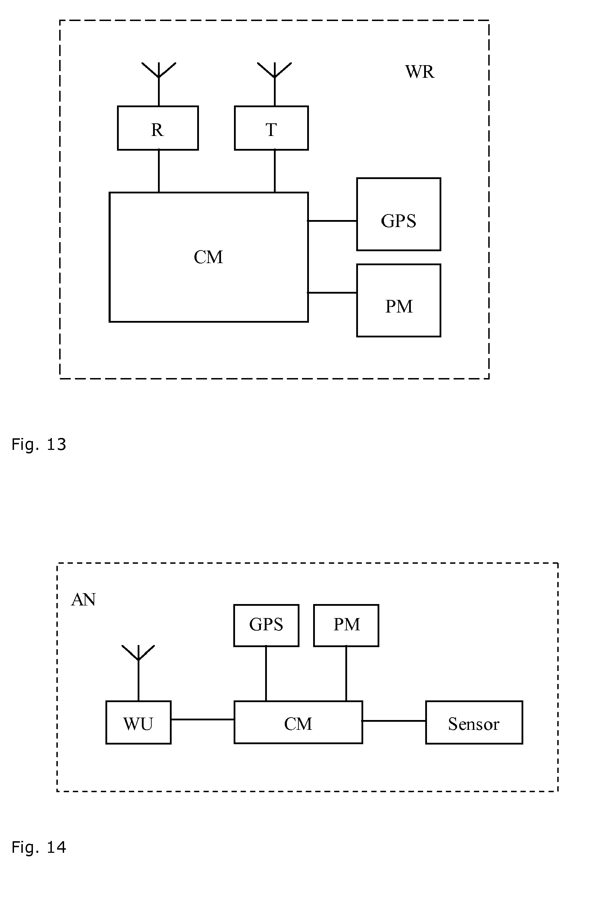

In the invention, the WR(fig. 13) comprises the CM, the PM, multi-channel Transmitter, multi-channel Receiver, and the GPS module; the CM performs control to multi-channel Transmitter and multi-channel Receiver according to the commands of CS, multi-channel Receiver receives the commands of CS and the data of AN, multi-channel Transmitter transmits the commands of CS and the data of AN.

In the invention, the WR has the function of routers and switches, transmits the commands of CS and the data of AN automatically;

In the invention, the CS which is the heart of the entire seismic instruments is responsible for controlling the entire digital seismic recorder working condition. In the invention, the Acquisition Node (AN) comprises the CM, the

Sensor, the WU and the GPS module; the WU receives and transmits the single channel data; the GPS module provides position information, sometimes supports the time synchronization.

As shown in fig. 11, fig.15-17, this invention of the wireless telemetry seismic recorder system on the captive balloon is a kind of wireless telemetry seismic recorder whose transmitting and receiving stations are on the captive balloon. This kind of wireless telemetry seismic recorder comprises three major units:the Central Control & Operation System (CCOS), Transmitter & Receiver on Captive Balloon (TRCB) and Wireless Acquisition Station (WAS). The most important feature of the system is to install the transmitting and receiving stations of ordinary wireless telemetry instrument on the high altitude Captive Balloon, which makes there is no obstacles and "visible" between the Captive Balloon and the WAS, improves the effective coverage of the data communication. That achieves a wireless telemetry technique in complex surface, and makes that the wireless telemetry digital seismic recorders realize real-time data acquisition and retrieving in complex surface.

The captive Balloon 1 is connected to a captive facility platform(such as vehicle-mounted car platform) through the captive cable 2, the captive cable has a copper wire as the power supply line, which provides power support for the TRCB on the Captive Balloon. The optical fiber is embedded in cable interspace, as the data communication channel for the CCOS and TRCB on the Captive Balloon.

The Captive Balloon's communication system can be arranged flexibly, and less invested, technology is relatively simple and easy to repair. As the loss of radio wave propagation in air is smaller than on the ground, to the same scope, one Transmitter on the Captive Balloon is equal to several on the ground.

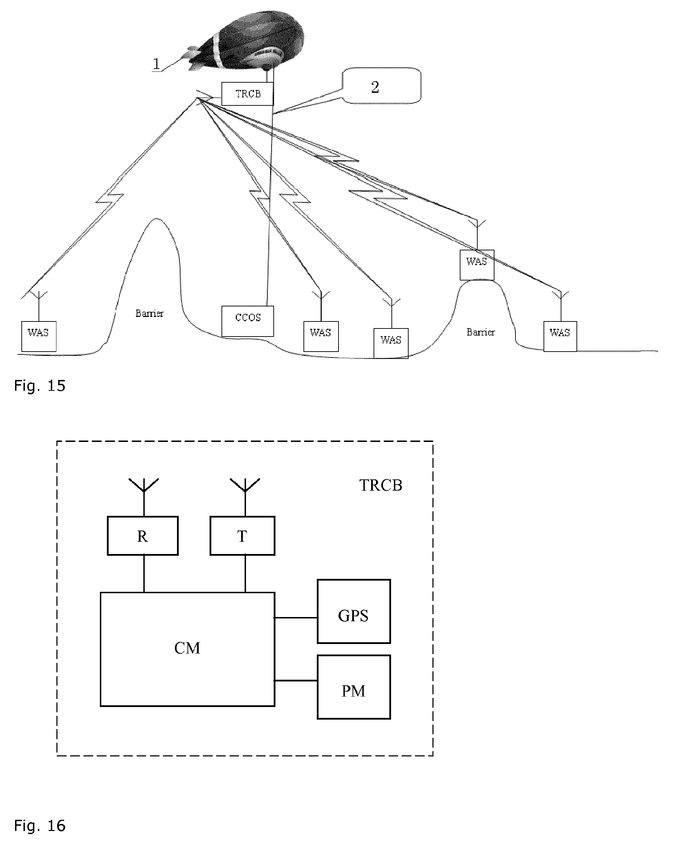

The TRCB of the wireless telemetry seismic recorder system on the Captive Balloon(fig. 16) comprises the CM, the PM, Transmitter (T), multi-channel Receiver (R) and the GPS module; the CM performs control to Transmitter and Receiver according to the command of the CCOS, Receiver receives the command of the CCOS and the data of WAS, Transmitter sends the command of the CCOS to WAS.

The CCOS of the wireless telemetry seismic recorder system on the Captive Balloon of the invention is arranged on an instrument truck (or on a captive facility platform, such as vehicle-mounted car platform), and controls the entire digital seismic recorders working condition, and is combined by software and hardware. The hardware of the CCOS comprises computer server, switch, PC, storage device, plotting equipment and the GPS module, and it performs human-computer interaction, layout control, acquisition synchronizing, data retrieve, quality control and so on. The Dawning's PHPC series computer can be used as the computer server. The network switch is a high-performance switch with 12 ports, the client computer terminal PC is an industrial control computer with a 24 inches LCD screen. The storage device may be a small 10T RAID5 disk array, or may be a IBM 3590 tape machine.

The WAS in the wireless telemetry seismic recorder system on the Captive Balloon of the invention comprises the CM, the PM, Sensor, the WU (Wireless Unit) and the GPS module; the WU provides single channel data receiving and transmission, and it establishes communication with TRCB on the Captive Balloon; the GPS module provides position information, also supports the time synchronization.

The captive cable has a copper wire as the power supply line, the optical fiber is embedded in cable interspace as the data communication channel, covered with a bearing fiber and lightning leader metal net, the outermost layer is a seal, resistant, anti-aging effect jacket. Because of the direction change of the balloon in the air, the capstan will rotate in operation, the connected ends of the captive cable are required to install optical rotary connector; upper connector can make the balloon and the captive cable move relatively, do not introduce any torsion into the cable; lower connector is installed on the captive cable capstan center axis, make the cable connected to the capstan, and do not have torsion as capstan moves. In short, the role of the connector, is must ensure that each function captive rope line has a low loss, high reliability connection. The captive balloon can be modified using the CCA-D products from Hangzhou Qianye Aircraft Techology Co., the"sentinel" series of captive air ships from Institute 605 of China Aviation Industry or the C series of products from Feiyu airline Co..

The shape of the Captive Balloon has ball, water-drop and airship, and the Captive Balloon may mount power device to keep the stability of the balloon position.

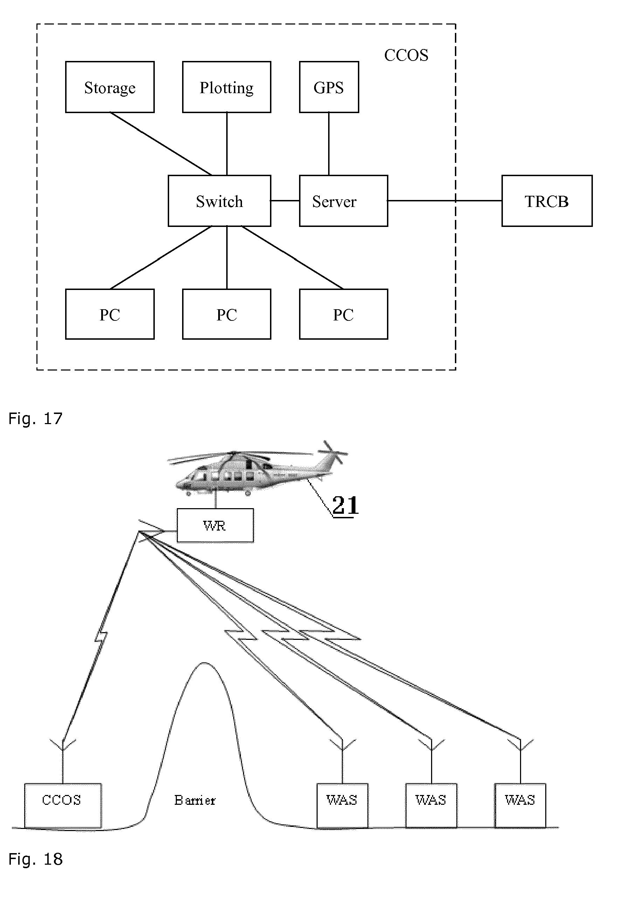

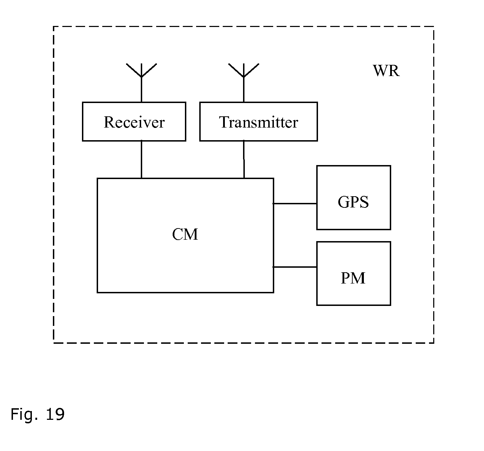

As shown in fig. 18-19, the invention of the wireless repeater station for wireless telemetry instrument data communication on aircraft 21 device uses aircraft to establish the WR in the high altitude, is used for wireless data communication and transmission for the wireless telemetry data acquisition instrument, it makes there is no obstacles and "visible" between the CCOS and the WR, WR and WAS of the instrument, enhances ability of wireless telemetry instrument passes through obstacles.

The WR is suspended below the aircraft 21 (fig. 18), the power supply of the WR is provided by aircraft. The aircraft staying in the air needs to consume fuel, so the WR is required to have a lighter weight and small energy consumption, so that the aircraft can stay in the air for a long time easily. The Barrier in fig.18 is the obstacle (mountain).

The CCOS is arranged on an instrument truck. The WR comprises the CM, the PM, multi-channel Transmitter, multi-channel Receiver, and the GPS module; the CM controls multi-channel Transmitter and multi-channel Receiver according to the commands of CS, multi-channel Receiver receives the commands of CS and the data of AN, multi-channel Transmitter transmits the commands of CS and the data of AN. The GPS module is used to obtain and provide position data. The wireless telemetry instrument is the wireless telemetry seismic recorder.

The aircraft 21 which carries the WR can include helicopter, or airship, or fixed-wing aircraft. When the aircraft is a helicopter or airship, uses a hover mode; When the aircraft is fixed-wing aircraft, uses a hover mode within a certain range, makes it "visible" between WR and WAS.

The work process of the WR is following:
a: the WR is connected to the CCOS.
b: the WR receives the command of the CCOS, transmits to the WAS ;
c: the WAS receives the command and gets the relative data then transmits to the WR ;
d: the WR receives the data, transmits to the CCOS.

In a word, the invention of the wireless repeater station for wireless telemetry instrument data communication on aircraft 21 device has a advantage that it can make that there is no obstacles and "visible" between the CCOS and the WR, WR and WAS of the instrument, enhance ability of wireless telemetry instrument passes through obstacles.

## Claims

1. A digital seismic recorder including wired, wireless and cable-less telemetry, **characterized in** which combines wired telemetry seismic recorder, wireless telemetry seismic recorder, and cable-less digital seismic recorder in optimization to constitutes a new digital seismic recorder system, comprises four parts: Central Control Operation System (CCOS) (usually on an instrument truck), wired telemetry Acquisition Station (AS), Wireless telemetry Acquisition Station (WAS) and Cable-less Acquisition Station (CAS). The CCOS is connected to wired communication Root Unit (RU), wireless communication root Unit (WRU) and Cable-less Data Unit (CDU) through the network respectively, and controls and connects to AS through the wired communication root unit (RU), controls and connect to WAS through wireless communication root unit (WRU), retrieves CAS's data through CDU.

2. The seismic recorder according to claim 1, **characterized in that** the CCOS is the control center and the data retrieving center of the whole seismic recorder, performs human-computer interaction, layout control, acquisition synchronizing, data retrieving and quality control. The CCOS, which usually mounted on the instrument truck, is the main control unit of the whole digital seismic recorder, whose hardware mainly comprises computer server, switch, PC, storage device, plotting equipment and software mainly comprises operation system software and control operation software. The CCOS is connected to RU, WRU and CDU through the network respectively, and controls and connects to AS through RU, controls and connect to WAS through WRU, retrieves CAS's data through CDU.

3. The seismic recorder according to claim 1, **characterized in that** the RU comprises a high-speed Switch Module (SM), a Control Module (CM), a Power Module (PM), and a GPS module. The RU is connected to CCOS by a network line, and provides fiber optic cable interfaces for connecting to the field ground equipment based on the requirement of the capacity of the instrument . The high-speed SM performs data switching; The CM performs control to the SM according to the command of the CCOS. The PM provides power support to each module.

4. The seismic recorder according to claim 1, **characterized in that** the WRU comprises a control module (CM), a power module (PM), radio Transmitter, radio Receiver and a GPS module; The WRU is connected to the CCOS by a network line, uses Transmitter to send control command to WAS, uses Receiver to receive the data of WAS, the CM performs control to the Transmitter and the Receiver according to the command of the CCOS; The PM provides power support to each module.

5. The seismic recorder according to claim 1, **characterized in that** the CDU comprises the SM, the CM, the PM, and the data Interface. The CDU is connected to the CCOS by a network line, provides interface to retrieve the data of CAS, the interface can have a variety of ways, such as Ethernet, USB, WiFi, Bluetooth and so on.

6. The seismic recorder according to claim 1, **characterized in that** the AS comprises the CM, the PM, the Sensor and the GPS module. The CM has two dedicated communication interface connected to the previous and next AS respectively, has a dedicated interface connected to the conventional geophone or the Sensor such as MEMS.

7. The seismic recorder according to claim 1, **characterized in that** the WAS comprises the CM, the PM, the Sensor, the Wireless Unit (WU) and the GPS module. The WU provides a single channel data receiving and transmission, establishes connection to the CCOS system; the GPS module provides position information, also supports the time synchronization;
wherein the said CAS comprises the CM, the PM, the Sensor, and the GPS module; compared with the WAS, it just lacks the WU;
wherein the said WAS and the CAS can be designed as a whole, designed and installed as the WAS, and when the WU in the WAS cannot connect to the CCOS, it will be turned off automatically, and acquire and receive data as the CAS.

8. The seismic recorder according to claim 1 or 2 or 3 or 4 or 5 or 6 or 7, **characterized in that** the GPS time synchronization is unified by the CCOS, then GPS time synchronization is executed on WAS and CAS, while two kinds of synchronization schemes are carried out on the AS : one is GPS time synchronization; the other is the synchronization by IEEE1588 protocol and pre-computed time difference.

9. The seismic recorder according to claim 1, **characterized in that** the seismic acquisition station of the invention is a combination of WAS and CAS; has six major components: the CU (Control Unit), the WCU (Wireless Communication Unit), the AU (Acquisition Unit), the SU (Storage Unit), the GPS module and the PU (Power Unit); the CU is a embedded CPU, is the heart of seismic acquisition station, makes the test and control to the WCU, the AU, the SU, the GPS module and the PU, and manage the retrieving data. The WCU, as a wireless transceiver, is connected to the CU, completes data communication between the acquisition station and the central station of seismic instruments , achieves the control and management to acquisition station. The AU comprises the Sensor and A/D conversion chip, is connected to the CU, and completes the retrieving data according to the command of the CU. The SU is a nonvolatile memory, and is connected to the CU. The GPS module is used to achieve time and data synchronization, also provides position information. The PU provides power support for CU, WCU, AU, SU and GPS. When the WCU works normally, acquisition station is set to the WAS mode by CU; when the WCU can not work normally, acquisition station is set to the CAS mode by CU.

10. The seismic recorder according to claim 9, **characterized in that** when acquisition station is set to the WAS mode, the SU is turned off; when acquisition station is set to the CAS mode, the SU is usually turned off for saving power consumption because the power consumption of non-volatile memory is larger" and is only turned on for accessing data when the data reaches a certain number;
wherein the said WCU is connected to CCOS for command control and data transmission;
the following measures being taken to decrease energy consumption: WCU is opened in fixed time, to get the next work plan, and determines the opening time of the WCU according to the work plan; this can minimize the opening time of WCU;
the PU can be external connected to the new type energy source to improve the power supply duration, the said new type energy source including the solar cells and fuel cells.

11. The seismic recorder according to claim 9 or 10, **characterized in that** the following work flow is taken:
(1) lay out according to the requirement of the observation system design;
(2) the seismic acquisition station communicates with CCOS through wireless, set to the WAS mode if connected, and receives command from the CCOS and completes the work; or set to the CAS mode if disconnected;
(3) after working for n (n is set in advance) hours, communicates with CCOS through wireless again, repeats step two.

12. The seismic recorder according to claim 1, **characterized in that** the wireless extensions device of the wired telemetry seismic recorder of the invention comprises two major units: Wireless Router (WR) and WAS; the WR is connected to the PU of the wired telemetry seismic recorder by a special 100 Mbit NL(Network Line), the WR can be connected to several WAS.

13. The seismic recorder according to claim 12, **characterized in that** the WR comprises the CM, the PM, single channel Transmitter (T), multi-channel Receiver (R), and the GPS module. The CM controls single channel transmitter and multi-channel receiver according to the command of the PU, and is connected to the PU of the wired telemetry seismic recorder by a special 100 M Bits NL; multi-channel receiver receives the date of the WAS, the single channel transmitter transmits the command from the PU, controls the data acquisition of WAS.

14. The seismic recorder according to claim 12, **characterized in that** the WR can be connected to any PU of the wired telemetry seismic recorder by a special 100 Mbit NL, implements wireless expansion, improves the wired telemetry seismic recorder's ability to adapt to the complex terrain;
the WU receives the command from Mainframe by the PU and controls the data acquisition of WAS, and transmits data to Mainframe by PU;
the special 100 Mbit NL is of custom made, which has the function of 100 Mbit NL and can supply power for WR.

15. The seismic recorder according to claim 12 or 13 or 14, **characterized in that** the WAS comprises the CM, the Sensor, the WU and the GPS module; the WU provides data receiving and transmitting by single channel; the GPS module provides position information, sometimes supports the time synchronization.

16. The seismic recorder according to claim 1, **characterized in that** the wireless telemetry seismic recorder of the invention, which utilizes the WR to improve the data communication ability, comprises three major units: the CS (Center Station), the WR and the AN (Acquisition Node); the CS is the heart of the entire seismic instruments, is responsible for controlling the entire digital seismic recorder working condition. The WR has the function of routers and switches, transmits the commands of CS and the data of AN automatically; the AN can either connect CS by wireless, or by wireless multi-hop manner through WR.

17. The seismic recorder according to claim 16, **characterized in that** the wireless router relay stations are usually set up in the higher ground areas, and a number of WR can be set up;
base on the wireless telemetry seismic recorder, we add WR which has a signal transmission and receiving function to the wireless telemetry seismic recorder, each WR connect to CS by wireless means, and can communicate with several acquisition stations directly, improves data communications capability by the manner of wireless relay.

18. The seismic recorder according to claim 16, **characterized in that** the AN and the CS establish communication using the following process: ①the AN seeks for the CS, if found, establishes communication with it, if not, then takes the second step; ②the AN seeks for the WR, if found, establishes communication with it, if not, then takes the first step;
the said WR comprises the CM, the PM, multi-channel Transmitter, multi-channel Receiver, and the GPS module; the CM performs control to multi-channel Transmitter and multi-channel Receiver according to the commands of CS, multi-channel Receiver receives the commands of CS and the data of AN, multi-channel Transmitter transmits the commands of CS and the data of AN.

19. The seismic recorder according to claim 16, **characterized in that** the AN comprises the CM, the Sensor, the WU and the GPS module; the WU receives and transmits the single channel data; the GPS module provides position information, sometimes supports the time synchronization.

20. The seismic recorder according to claim 1, **characterized in that** the wireless telemetry seismic recorder is a kind of captive balloon carrying system which comprises three major units: the Central Control & Operation System (CCOS), Transmitter & Receiver on Captive Balloon (TRCB) and Wireless Acquisition Station (WAS); the Captive Balloon connects to the captive facility platform by the captive cable, the captive cable has a copper wire as the power supply line, provides power support for the TRCB on the Captive Balloon; the optical fiber is embedded in cable interspace, as the data communication channel for the CCOS and TRCB on the Captive Balloon.

21. The seismic recorder according to claim 20, **characterized in that** the TRCB on the Captive Balloon comprises the CM, the PM, Transmitter (T), multi-channel Receiver (R) and the GPS module; the CM performs control to Transmitter and Receiver according to the command of the CCOS, Receiver receives the command of the CCOS and the data of WAS, Transmitter sends the command of the CCOS to WAS. The GPS module is used to obtain and provide position data; the multi-channel receiver R is the multi-channel receiver of VHF.

22. The seismic recorder according to claim 20, **characterized in that** the CCOS is arranged on an instrument truck or a captive facility platform, software and hardware is combined, and it controls the entire digital seismic recorder working condition. The hardware of the CCOS comprises computer server, switch, PC, storage device, plotting equipment and the GPS module, and it performs human-computer interaction, layout control, acquisition synchronizing, data retrieve, quality control and the like. The captive facility platform is vehicle-mounted car platform;
the WAS comprises the CM, the PM, Sensor, the WU and the GPS module; the WU provides single channel data receiving and transmission, and it establishes communication with TRCB on the Captive Balloon; the GPS module provides position information, also supports the time synchronization; the shape of Captive Balloon has ball, water-drop and airship;
the Captive Balloon can equip power device to keep the balloon position on the stability.

23. The seismic recorder according to claim 20 or 21 or 22, **characterized in that** the captive cable has a copper wire as the power supply line, the optical fiber is embedded in cable interspace as the data communication channel, covered with a bearing fiber and lightning leader metal net, the outermost layer is a seal, resistant, anti-aging effect jacket;
the connected ends of the captive cable are required to install optical rotary connector; upper connector can make the balloon and the captive cable move relatively, do not introduce any torsion into the cable; lower connector is installed on the captive cable capstan center axis, make the cable connected to the capstan, do not have torsion as capstan moves.

24. The seismic recorder according to claim 1, **characterized in that** the wireless repeater WR is set up using aircraft for wireless data communication and transmission for the wireless telemetry data acquisition instrument, which makes there is no obstacles and "visible" between the CCOS and the WR, WR and WAS of the instrument, enhances ability of wireless telemetry instrument to pass through obstacles.

25. The seismic recorder according to claim 24, **characterized in that** the WR is suspended below the aircraft, the power supply of the WR is provided by aircraft; the CCOS is arranged on an instrument truck;
the WR comprises the CM, the PM, multi-channel Transmitter, multi-channel Receiver, and the GPS module; the CM controls multi-channel Transmitter and multi-channel Receiver according to the commands of CS, multi-channel Receiver receives the commands of CS and the data of AN, multi-channel Transmitter transmits the commands of CS and the data of AN. The GPS module is used to obtain and provide position data. The wireless telemetry instrument is the wireless telemetry seismic recorder.

26. The seismic recorder according to claim 25, wherein the WR uses the following working process:
a: the WR is connected to the CCOS.
b: the WR receives the command of the CCOS, transmits to the WAS ;
c: the WAS receives the command and gets the relative data then transmits to the WR ;
d: the WR receives the data, transmits to the CCOS.

27. The seismic recorder according to claim 24 or 25 or 26, **characterized in that** the aircraft carrying the WR includes helicopter, or airship, or fixed-wing aircraft;
when the aircraft is helicopter or airship, uses a hover mode; When the aircraft is fixed-wing aircraft, uses a hover mode within a certain range, makes it "visible" between WR and WAS;
the helicopter is manned or unmanned helicopter, the airship is manned or unmanned airship.

28. The seismic recorder according to claim 27, **characterized in that** the helicopter can also be the electric unmanned helicopter power supplied by a cable connected to the ground.
